# DEMANDE DE BREVET EUROPEEN

(11) **EP 0 908 104 A1**
(43) Date de publication de la demande: **14.04.1999**
(21) Numéro de dépôt: 98490024.1
(22) Date de dépôt: 24.09.1998
(51) Int. Cl.: A23B 7/005, A23L 3/18

(54) **Procédé et dispositif de traitement de produits alimentaires**

(30) Priorité: 24.09.1997 FR 9712093
(71) Demandeur: Bonduelle Société Anonyme, 59173 Renescure (FR)
(72) Inventeur: Jude, Albert, 59173 Renescure (FR); Maureau, Alain, 59173 Renescure (FR); Albino, Lionel, 59173 Renescure (FR); Bocquet, Daniel, 59173 Renescure (FR)
(74) Mandataire: Duthoit, Michel

(57) **Abrégé**

La présente invention concerne un procédé de traitement de produits alimentaires (1), tels que, par exemple, des légumes, fruits ou autres, dans lequel :
- on sépare lesdits produits alimentaires (1) en doses (2) prédéterminées,
- on stabilise lesdits produits alimentaires (1) séparés en doses (2) et prévus directement accessibles,
- on conditionne lesdits produits alimentaires (1) séparés en doses (2) et stabilisés dans des emballages (3).

L'invention concerne également un dispositif pour la mise en oeuvre dudit procédé.

## Description

La présente invention concerne un procédé et un dispositif de traitement de produits alimentaires tels que, par exemple, des légumes ou des fruits.

Toutefois, bien que plus particulièrement prévue pour de telles applications, elle pourra également être utilisée, de manière générale, pour traiter des produits alimentaires comme, notamment, des mélanges à base de viande et/ou de poisson, des pâtes alimentaires ou autres.

En raison des microorganismes qu'ils présentent, les produits alimentaires se dégradent naturellement et deviennent rapidement impropres à la consommation.

Pour enrayer ce processus, il est nécessaire de les stabiliser de manière à allonger leur durée de conservation, par exemple en les pasteurisant ou en les stérilisant.

Selon un procédé classique utilisé en ce sens, appelé appertisation, on introduit les produits dans les emballages tels que boîtes, bocaux ou autres dans lesquels ils sont destinés à être conservés, on remplit lesdits emballages d'un jus de couverture puis on les scelle ou ferme hermétiquement. L'ensemble est alors soumis à un chauffage selon un barème donné.

Un des principaux inconvénients de ce procédé réside dans les temps de chauffage nécessaires qui sont particulièrement longs et entraînent une altération des qualités organoleptiques des produits et notamment de leur goût, de leur couleur, de leur texture et/ou de leur qualité.

Ainsi, pour certains produits tels que, par exemple, les haricots verts, ils provoquent une surcuisson dommageable pour le légume. En effet, ceux-ci pour être stabilisés doivent subir un chauffage entraînant à lui seul une cuisson du légume plus poussée que la cuisson nécessaire à sa consommation à partir d'un légume frais. On conçoit donc que l'attrait pour des produits ayant subi un tel traitement soit limité.

Certaines améliorations ont été tentées. Elles ne sont toutefois pas entièrement concluantes.

Ainsi, selon un autre procédé, il est connu d'introduire, les produits que l'on souhaite stériliser dans leur emballage de conservation, constitué d'une boîte métallique, sans néanmoins le remplir de jus et en le laissant ouvert.

On réalise alors une stérilisation à la vapeur dans une enceinte sous vide puis on ferme ledit emballage que l'on soumet ensuite à un refroidissement.

Bien que permettant un certain gain de temps, ce procédé présente toutefois l'inconvénient d'entraîner de fortes contraintes au niveau de l'emballage en raison des conditions de stérilisation. Celui-ci est ainsi trop souvent dégradé après traitement.

Ce procédé entraîne en outre la présence de condensats dans les emballages, ce qui est nuisible à la qualité du produit.

Selon un autre procédé, il est également connu, toujours en introduisant le produit que l'on souhaite stériliser dans son emballage de conservation, d'améliorer sa résistance aux contraintes en le refermant, partiellement, à l'aide de son couvercle.

On le soumet alors à une étape de stérilisation sous pression par phase vapeur puis on complète la fermeture de ladite boîte par sertissage. On soumet enfin l'ensemble à un refroidissement.

Bien que plus satisfaisant en ce qui concerne l'état desdits emballages après traitement, ce procédé conserve toutefois des inconvénients. Ainsi, par exemple, dans le cas d'haricots verts, on a constaté que ceux-ci étaient écrasés les uns sur les autres à l'intérieur des boîtes, probablement en raison des variations de pression dont ils sont l'objet lors du traitement.

De plus, selon ce procédé, aucun ajout tel que, par exemple, celui d'une sauce d'accompagnement des produits n'est possible. Il est également à noter qu'il ne permet pas d'utiliser d'autre fluide caloporteur que la vapeur.

Compte tenu de ces résultats, en partant de nouveau des procédés d'appertisation classiques, des recherches ont été effectuées dans une direction différente. Il a ainsi été développé des procédés selon lesquels la quantité de jus de couverture employé est plus faible et les barèmes de chauffage différents de ceux précédemment utilisés, permettant certains gains de temps.

Toutefois, ces procédés ne permettent pas d'éliminer l'ensemble des problèmes précédemment rencontrés. Ils nécessitent ainsi, notamment, l'utilisation de boîtes et/ou bocaux suffisamment rigides pour supporter les contraintes de stérilisation.

En outre, ils ne permettent pas de diminuer significativement la durée de traitement des produits et donc leur cuisson, nuisant ainsi à leurs qualités organoleptiques.

On connaît par ailleurs des procédés de pasteurisation ou stérilisation selon lesquels le produit que l'on souhaite conserver est traité préalablement à sa mise en boîte puis introduit dans des emballages plus ou moins souples. Il s'agit, par exemple, de procédés de stabilisation conduits dans des dispositifs tubulaires, les produits après chauffage étant introduits dans des réceptacles tels que, par exemple, des boîtes cartonnées, des bouteilles plastiques ou autres.

Toutefois, actuellement, ces procédés ne s'intéressent qu'à des produits pompables comme des liquides ou des ingrédients plus ou moins pâteux comme des soupes ou des purées. Ils ne permettent donc pas la stabilisation de produits entiers ou en gros morceaux.

Le but de la présente invention est de proposer un procédé et un dispositif de traitement de produits alimentaires qui pallient les inconvénients précités et permettent de stabiliser lesdits produits tout en conservant leurs propriétés organoleptiques de manière à conserver des caractéristiques les plus proches possibles du produit frais.

Un autre but de la présente invention est de proposer un procédé et un dispositif de traitement de produits alimentaires qui permettent de stabiliser lesdits produits en un temps réduit.

Un autre but de la présente invention est de proposer un procédé et un dispositif de traitement de produits alimentaires qui permettent de conditionner des produits stabilisés dans des emballages de tout type.

Un autre but de la présente invention est de proposer un procédé et un dispositif de traitement de produits alimentaires qui permettent de bénéficier des produits stabilisés mélangés entre eux et/ou avec une sauce ou jus d'accompagnement.

Un autre but de la présente invention est de proposer un procédé et un dispositif de traitement de produits alimentaires qui permettent d'obtenir des durées de conservation des produits traités, allant jusqu'à plusieurs années.

D'autres buts et avantages de la présente invention apparaîtront au cours de la description qui va suivre qui n'est donnée qu'à titre indicatif et qui n'a pas pour but de la limiter.

L'invention concerne un procédé de traitement de produits alimentaires, tels que, par exemple, des légumes, fruits ou autres, dans lequel :
- on sépare lesdits produits en doses prédéterminées,
- on stabilise lesdits produits, séparés en doses et prévus directement accessibles,
- on conditionne lesdits produits séparés en doses et stabilisés dans des emballages.

L'invention concerne également un dispositif pour la mise en oeuvre du procédé décrit ci-dessus de traitement de produits alimentaires tels que, par exemple, des légumes, fruits ou autres, comprenant des moyens d'entraînement desdits produits selon un circuit de traitement et, successivement, le long dudit circuit, au moins :
- des moyens pour séparer lesdits produits en doses prédéterminées,
- des moyens pour stabiliser lesdits produits,
- des moyens pour conditionner lesdits produits dans des emballages.

L'invention sera mieux comprise à la lecture de la description suivante accompagnée des dessins en annexe qui en font partie intégrante et parmi lesquels :
- la figure 1 décrit de manière schématique, en vue de face, un premier exemple de mise en oeuvre du dispositif de traitement conforme à l'invention,
- la figure 2 décrit de manière schématique, en vue de dessus, un second exemple de réalisation du dispositif de traitement conforme à l'invention.

L'invention concerne tout d'abord un procédé de traitement de produits alimentaires, tels que, par exemple, des légumes et/ou des fruits.

Toutefois, bien que plus particulièrement prévue pour de telles applications, elle pourra également être utilisée, de manière plus large, pour des produits alimentaires comme, notamment, des morceaux de viande et/ou de poisson, des pâtes alimentaires ou autres.

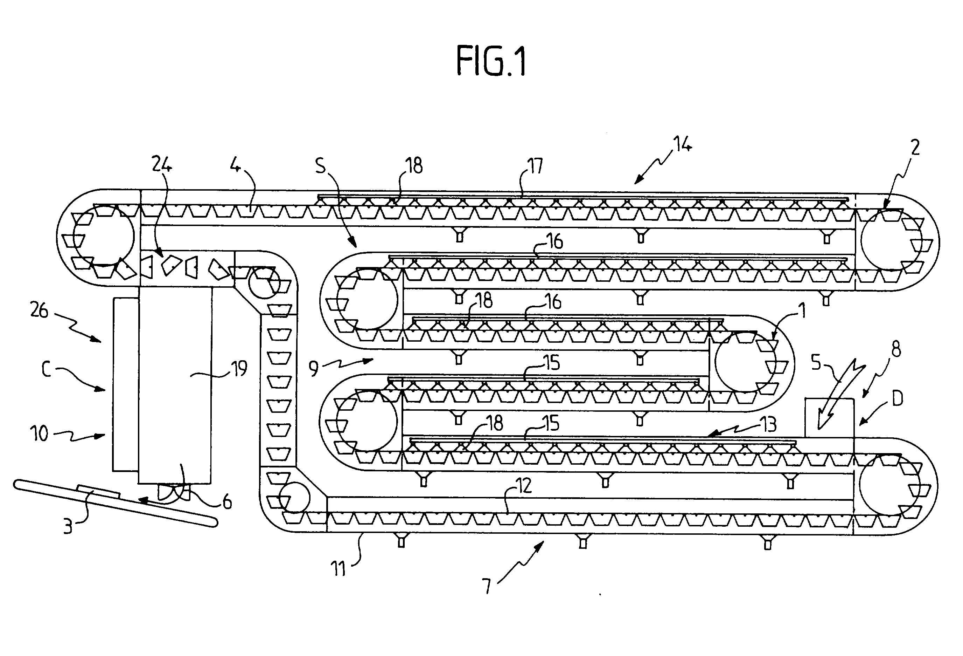

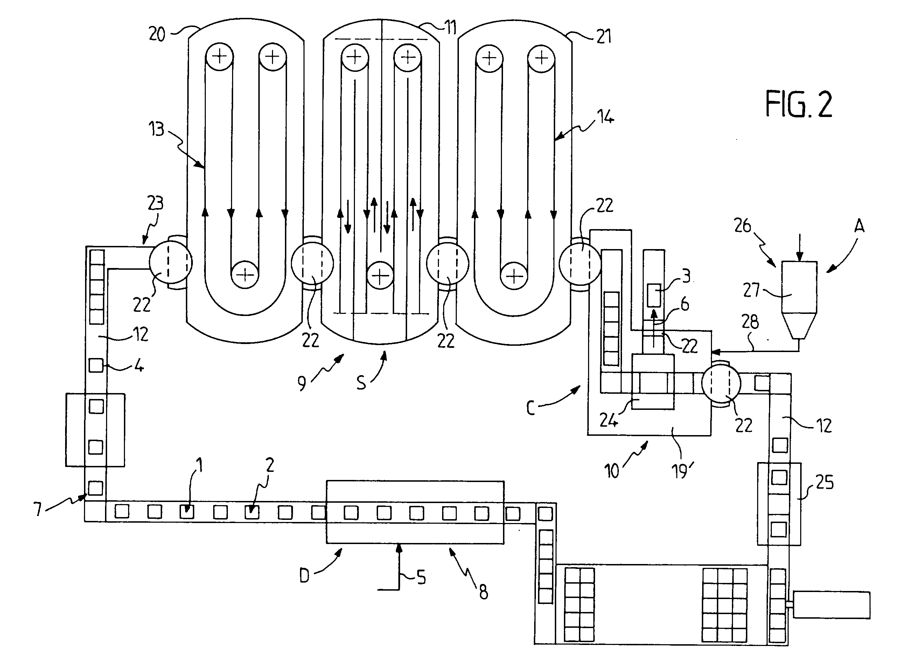

Comme illustré aux figures 1 et 2, selon le procédé conforme à l'invention, on sépare tout d'abord lesdits produits alimentaires 1 à traiter en doses 2 prédéterminées, par exemple en D, puis on stabilise lesdits produits 1, séparés en doses 2 et prévus directement accessibles, par exemple en S, et on conditionne lesdits produits 1 séparés en doses 2 et stabilisés dans des emballages 3, par exemple en C.

Par « directement accessibles », on entend que lesdits produits 1 ne se trouvent pas, lors de la stabilisation, dans une ambiance isolante telle qu'une boîte ou un bocal étanche et/ou hermétiquement fermé ni avec un jus de couverture ou un liquide de mise en suspension non renouvelé. Au contraire, selon l'invention, un contact direct entre lesdits produits alimentaires et le vecteur stabilisant est possible lors de cette phase.

Des échanges, notamment thermiques, pourront donc plus facilement avoir lieu entre lesdits produits alimentaires 1 et ledit vecteur, permettant de la sorte une accélération du traitement.

La surcuisson desdits produits pourra ainsi être évitée ou la cuisson tout du moins écourtée en permettant une meilleure conservation des qualités organoleptiques des produits traités.

Par ailleurs, par « emballage 3 », on entend l'emballage dans lequel les produits alimentaires sont destinés à être conservés et/ou offerts à la vente. Il est ainsi à noter que, l'emballage ayant lieu après la stabilisation, il est possible d'utiliser un grand nombre de types différents de conditionnement, ces derniers n'ayant plus, contrairement aux procédés classiques d'appertisation, à résister aux conditions, notamment de pression et/ou de température, rencontrées lors de la stabilisation.

En fait, leur seule fonction n'est plus que de protéger les produits alimentaires préalablement stabilisés.

Selon les différents modes de réalisation illustrés, on stabilise lesdits produits 1 au niveau d'un support, apte à maintenir lesdites doses 2 séparées et à permetre la libre circulation d'un fluide au contact desdits produits.

Il s'agit, notamment, de contenants 4, ouverts et/ou perforés aptes à accueillir lesdites doses 2. Lesdits contenants 4 sont, par exemple, entraînés les uns derrière les autres. Il pourra s'agir, notamment, de conteneurs présentant une face supérieure ouverte et un fond et/ou des parois latérales perforées.

La stabilisation des produits est menée, par exemple, de manière thermique grâce audit fluide, prévu caloporteur. Celui-ci est utilisé, notamment, par injection, pulvérisation et/ou aspersion sur lesdits produits, prévus dans une ambiance sous pression.

Selon un premier mode de réalisation, il pourra s'agir de vapeur. Selon un autre mode de réalisation, il pourra s'agir d'un liquide surchauffé. Dans les deux cas, le fluide utilisé pourra être de l'eau.

L'échange de température s'effectue ainsi très rapidement par passage du fluide au contact des produits alimentaires. A titre d'exemple, un débit d'eau surchauffée de 20 à 50 m³/h/m² pourra être envisagé.

La température à laquelle ledit fluide caloporteur est prévu pendant cette phase est, par exemple, de 100 à 150 °C, le traitement ayant lieu, notamment, dans un temps variant de 30 sec à 10 mn. Plus précisément, il pourra s'agir, par exemple, d'une durée d'environ 1 à 4 mn.

La stabilisation est effectuée, éventuellement, par injection, pulvérisation et/ou aspersion au-dessus et/ou au-dessous des contenants 4.

En cas d'utilisation d'eau surchauffée, celle-ci sera maintenue en phase liquide par une légère surpression, par exemple de 0,2 à 4 bar, notamment obtenue par injection de vapeur vive.

En outre, un léger courant de vapeur d'aval vers l'amont pourra être éventuellement prévu afin d'éviter tout risque de propagation de germes contaminants dans la direction opposée.

Par ailleurs, afin d'assaisonner ou d'acidifier lesdits produits alimentaires, le fluide caloporteur pourra éventuellement être additionné d'ingrédients divers aptes à être transférés, au moins partiellement, dans les produits.

Une évacuation et un recyclage du fluide caloporteur avec maintien de ses caractéristiques, notamment microbiologiques et physicochimiques pourront aussi être prévus afin de permettre sa réutilisation.

Selon d'autres modes de mise en oeuvre, la stabilisation pourra être obtenue soit par pasteurisation à une température de l'ordre de 80 à 110 °C, pendant un temps de 30 sec à 30 mn, et notamment une pasteurisation flash de 30 sec à 2 min, ou par stérilisation UHT à une température supérieure à 110°C, par exemple comprise entre 125 et 150 °C pendant un temps compris entre 30 sec et 30 mn, et notamment 1 à 4 mn, en fonction du produit alimentaire traité.

Cela étant, on constate que les produits traités peuvent, selon le procédé conforme à l'invention, se présenter sous forme solide, sèche et divisée. Par « solide, sèche et divisée », on entend que lesdits produits alimentaires ne se présentent pas comme une phase fluide ou une suspension dans un liquide porteur les rendant pompables, et peuvent être constitués de produits entiers et/ou en morceaux.

Dans ce cas, on transfère alors lesdits produits dans lesdits emballages 3, par exemple, sous la même forme solide, sèche et divisée, permettant leur consommation sous cette présentation.

Cela étant, en fonction des utilisations ultérieures, une sauce ou jus d'accompagnement ou similiaire peut être introduite dans lesdits emballages 3, ladite sauce ayant été, notamment, stérilisée en parallèle selon un traitement indépendant, par exemple, en A.

Pour cela, ladite sauce est, notamment, préparée de façon traditionnelle avant d'être stabilisée et refroidie, selon des procédés classiques de stabilisation des produits pompables. Elle est ensuite introduite, après dosage, dans lesdits emballages 3, par ailleurs, remplis de légumes stabilisés.

Concernant le cheminement desdits produits, ceux-ci sont, par exemple, approvisionnés selon un flux plus ou moins continu, symbolisé par la flèche repérée 5, ledit flux étant ensuite séparé dans lesdits contenants 4, prévus aptes à accueillir une dite dose 2.

De même, après stabilisation, on transfère lesdits produits depuis lesdits contenants 4 dans lesdits emballages 3, ceux-ci étant prévus aptes, par exemple, à accueillir une même quantité de produits que lesdits contenants 4.

Selon un premier mode de réalisation, une même et unique dose 2 est ainsi introduite dans ledit contenant 4, stabilisée puis transférée dans ledit emballage 3, les doses 2 étant directement séparées selon des quantités correspondant aux quantités à emballer. La manipulation des produits est ainsi diminuée.

Selon d'autres modes de réalisation, on pourra également additionner les doses 2 entre elles ou les diviser en différentes fractions. A partir de contenants 4 accueillant une dite dose 2, on pourra ainsi, par exemple, transférer dans chaque emballage 3 un multiple et/ou fraction de ladite dose 2.

Cela étant, selon un premier mode de réalisation, les contenants 4 circulent selon un circuit se bouclant sur lui-même. Selon un autre mode de réalisation, il pourra s'agir d'un circuit ouvert, par exemple si lesdits contenants 4 sont introduits dans lesdits emballages 3.

Par ailleurs, la circulation desdits contenants 4 pourra être soit continue, soit discontinue, par exemple avec des accumulations lors des différentes phases du traitement, puis libération en groupe ou à l'unité.

On pourra prévoir un lavage des produits alimentaires et/ou un pré-traitement thermique de ces derniers avant stabilisation.

Le lavage a lieu, par exemple, après ou avant dosage. Quant au pré-traitement thermique, il s'agit, notamment, d'un préchauffage effectué, par exemple, après ledit lavage de manière, notamment à homogénéiser les températures des produits avant stabilisation.

Ce préchauffage est réalisé, par exemple, par aspersion d'eau chaude, selon un débit de 20 à 50 m³/h/m². La température du fluide caloporteur est, par exemple, de 70 à 115 °C, l'aspersion ayant lieu pendant une durée variant, notamment de 30 sec à 10 mn.

Ce préchauffage pourra en outre, éventuellement, être suivi d'un refroidissement homogène desdits produits avant stabilisation.

Il est à noter que ce préchauffage pourra constituer un traitement pouvant se substituer au blanchiment en vrac habituellement appliqué à certains produits alimentaires selon les procédés connus.

De même que dans la phase de stabilisation, le fluide servant d'agent caloporteur est aspergé, par exemple, par au-dessus et/ou en-dessous desdits contenants 4. En outre, son recyclage pourra être prévu afin de permettre sa réutilisation.

De manière à conserver l'intégrité des produits alimentaires traités en évitant leur altération selon le phénomène connu sous le nom de « pelage » il est prévu, par exemple, de refroidir sous pression contrôlée lesdits produits préalablement à leur conditionnement, ceci afin de faire redescendre leur température interne après stabilisation à une température inférieure à la température de vaporisation du fluide caloporteur à la pression de la zone de conditionnement.

Cette étape est réalisée, par exemple, par pulvérisation d'eau froide, il s'agit, notamment, d'eau stérile, les échanges thermiques étant favorisés par libre circulation du fluide au contact desdits produits à travers lesdits contenants 4

Ici aussi, le traitement s'effectue par en-dessous et/ou au-dessus desdits contenants 4, l'eau pouvant, en outre, éventuellement être recirculée afin d'être réutilisée.

La pression utilisée lors du refroidissement est, par exemple, sensiblement identique à celle utilisée lors de la stabilisation.

En outre, une étape d'égouttage sans aspersion d'eau pourra éventuellement être prévue avant transfert desdits produits alimentaires dans leur emballage 3.

Afin de favoriser la conservation desdits légumes après conditionnement, ceux-ci sont transférés dans lesdits emballage 3, par exemple, dans un environnement microbiologiquement contrôlé.

Il pourra s'agir d'une salle blanche et/ou d'un transfert sous condition aseptique.

Pour cela, lesdits emballages 3 sont, notamment préalablement stérilisés puis les doses 2 de produit se trouvant dans lesdits contenants 4 sont introduites, par basculement, desdits contenants 4 dans lesdits emballages 3. Lors de cette phase, ils pourront être entraînés par leur éventuelle sauce d'accompagnement venant de A. Ledit emballage 3 est alors refermé, éventuellement avec mise sous vide et/ou injection de gaz ou de mélange gazeux neutre. L'ensemble de ces opérations a lieu en milieu stérile.

Lesdits emballages 3 sont, par exemple, déformables c'est-à-dire non résistants à une température supérieure à 100 °C et/ou à la pression et/ou à l'eau.

Il pourra ainsi s'agir, notamment, de briques cartonnées, de sachets thermoplastiques, de barquettes plastiques et/ou autres. En effet, ceux-ci, n'ayant plus à subir les contraintes de stabilisation des produits alimentaires, peuvent être de constitution moins robuste que ceux employés avec les procédés classiques d'appertisation.

Une fois emballés, lesdits produits alimentaires 1 sont alors évacués selon une flèche repérée 6.

Ainsi, selon les différents exemples de réalisation illustrés, les produits alimentaires 1 sont tout d'abord séparés en doses 2, puis éventuellement lavés avant d'être préchauffés. Ils sont alors stabilisés et refroidis ainsi qu'éventuellement égouttés avant d'être introduits, sous conditions aseptiques, dans des emballages 3, alors prêts à être évacués. Pendant l'ensemble du traitement, ils sont transportés, séparés en doses unitaires, dans lesdits contenants 4.

Cela étant, il est à noter que ces derniers, après avoir été vidés desdits produits alimentaires et avant de recevoir une nouvelle dose 2 sont, éventuellement, nettoyés.

En outre, avant mise en route des installations correspondantes, une stérilisation, notamment à la vapeur vive ou à l'aide d'agent chimique stérilisant, pourra être envisagée.

Par ailleurs, préalablement à leur séparation en doses, lesdits produits alimentaires 1 sont, éventuellement, parés, découpés, lavés, contrôlés et/ou blanchis.

La présente invention concerne également un dispositif pour la mise en oeuvre du procédé décrit plus haut. Il comprend tout d'abord des moyens d'entraînement 7 desdits produits selon un circuit de traitement et, successivement, le long dudit circuit au moins des moyens 8 pour séparer lesdits produits en doses prédéterminées 2, des moyens 9 pour stabiliser lesdits produits et des moyens 10 pour conditionner lesdits produits dans des emballages 3.

Lesdits moyens 9 pour stabiliser, prévus dans la première zone S coopèrent, notamment, avec une enceinte 11, dite de stabilisation, lesdits moyens 8 pour séparer les produits en doses prédéterminées se trouvant dans la seconde zone D en amont de ladite première zone S et les moyens pour conditionner 10 en aval dans la troisième zone C.

Lesdits moyens d'entraînement 7 comprennent, par exemple, un support permettant la libre circulation d'un fluide au contact desdits produits et le maintien séparé desdites doses, ledit support étant prévu apte à circuler dans ladite enceinte de stabilisation.

Il s'agit, notamment d'une pluralité de contenants 4 ouverts et/ou perforés, aptes à accueillir lesdites doses 2. Lesdits moyens d'entraînement 7 sont ainsi constitués, notamment, d'un ou plusieurs convoyeurs 12 supportant lesdits contenants 4, par exemple régulièrement espacés. Il pourra s'agir, par exemple, de chaînes à godets et/ou de tapis aptes à faire circuler lesdits contenants 4 les uns derrière les autres.

Le ou lesdits convoyeurs 12 permettent, notamment, une circulation en continu desdits contenants 4, ces derniers conservant éventuellement une position horizontale sur l'ensemble du circuit, sauf au moment de leur vidange au-dessus desdits emballages 3, celle-ci étant réalisée par pivotement autour d'une articulation, prévue coopérante avec le ou lesdits convoyeurs 12.

Plusieurs vitesses de défilement pourront éventuellement être envisagées.

Lesdits moyens pour stabiliser 9 permettent, par exemple, l'injection, la pulvérisation et/ou l'aspersion, sous pression, d'un fluide caloporteur sur lesdits contenants 4. Ils seront détaillés dans la suite.

Lesdits moyens 8 pour séparer lesdits produits sont aptes à permettre, notamment, l'introduction d'une dite dose 2 dans chacun desdits contenants 4. En outre, lesdits moyens 10 pour conditionner sont aptes à permettre éventuellement, un transfert desdits produits 1 desdits contenants 4 dans lesdits emballages 3.

Cela étant, le dispositif conforme à l'invention comprend, en outre, par exemple, des moyens 13 pour préchauffer lesdits produits et/ou des moyens 14 pour les refroidir sous pression contrôlée.

Plus précisément si l'on se reporte à l'exemple de réalisation illustré à la figure 1, on constate que lesdits moyens 13 pour préchauffer et/ou lesdits moyens 14 pour refroidir sont prévus au niveau de ladite enceinte de stabilisation 11, prévue unique, lesdits moyens pour préchauffer 13, pour stabiliser 9 et/ou pour refroidir 14 étant constitués de plusieurs rampes d'aspersion 15, 16, 17 d'un fluide caloporteur, disposées successivement dans cet ordre en regard des moyens d'entraînement 7, ces derniers étant confinés dans ladite enceinte 11.

Les produits sont amenés dans ladite enceinte 11, par exemple, au moyen d'une chaîne à godets, non représentée, synchronisée avec les moyens d'entraînement 10..

Cette chaîne permet de transporter lesdits produits de la doseuse jusqu'à ladite enceinte 11.

L'introduction desdites doses 2 dans celle-ci se fait, notamment, par l'intermédiaire de sas.

Un certain nombre de rampes 15, 16, 17 pour le préchauffage, la stérilisation et/ou le refroidissement sont disposées à la suite l'une de l'autre, l'utilisation d'une ou plusieurs rampes déterminant le temps de traitement tandis que la vitesse des moyens d'entraînement est stable et calquée sur celle des moyens pour conditionner 10.

Selon un exemple particulier de réalisation, une présence plus importante de vapeur permettant de maintenir la surpression sera prévue dans les parties de l'enceinte 11 où s'effectue la stabilisation.

Après avoir été stabilisés et refroidis, lesdits produits alimentaires 1 sortent de ladite enceinte 11 en direction de ladite zone de conditionnement C par un sas.

Par ailleurs, les moyens 10 pour conditionner lesdits produits sont par exemple, prévus maintenus dans un environnement microbiologiquement contrôlé et, selon le mode de réalisation décrit plus haut, l'emballage s'effectue dans une enceinte de conditionnement 19, prévue stérile.

En se reportant maintenant au dispositif illustré à la figure 2, on constate qu'il comprend outre l'enceinte de stabilisation 11, une enceinte 20, dite de préchauffage, comprenant lesdits moyens pour préchauffer 13 et une enceinte 21, dite de refroidissement, comprenant lesdits moyens 14 pour refroidir. Ladite enceinte 20 de préchauffage est prévue entre ladite première zone D, de dosage, et ladite enceinte de stabilisation 11. Quant à ladite enceinte 21 de refroidissement, elle est prévue entre ladite enceinte de stabilisation 11 et ladite troisième zone C, de conditionnement.

De plus, lesdits moyens d'entraînement 7 permettent par des sas isolants 22 l'introduction desdits contenants 4 dans ladite enceinte de préchauffage 20, leur transfert entre lesdites enceintes 20, 11, 21 et entre ladite enceinte de refroidissement 21 et ladite troisième zone C ainsi que leur sortie de ladite troisième zone C.

Lesdits sas 22 sont, par exemple, des sas rotatifs permettant le passage entre deux ambiances, éventuellement à des pressions différentes.

Chaque enceinte 20, 11, 21, comprend une série de convoyeurs 12, éventuellement modulables dans leur succession, pour transférer lesdits contenants 4. La réception et la sortie de ces derniers sont réalisées, par exemple, à l'aide d'étoiles de transfert.

Avant introduction dans ladite enceinte de préchauffage 20, un cadenseur tel qu'une vis sans fin 23, pourra éventuellement être prévu afin d'espacer régulièrement les contenants 4 sur le convoyeur 12. Il est, par exemple, asservi aux moyens 10 pour conditionner.

L'éventuel emballage sous environnement microbiologiquement contrôlé a lieu, par exemple, dans une enceinte de conditionnement 19', maintenue stérile et/ou une salle blanche, dans laquelle les contenants 4, après avoir été synchronisés, défilent au-dessus des réceptacles d'emballage 3 dans lesquels leur contenu est déversé.

Une enceinte de lavage 25 desdits contenants 4 vide est également prévue, éventuellement, en sortie de ladite zone de conditionnement C. A l'intérieur de ladite enceinte de lavage 25, lesdits contenants 4 sont éventuellement retournés afin d'améliorer leur nettoyage.

En outre, en aval, une zone de stockage desdits contenants 4 vide peut être prévue. Elle sert, notamment, de tampon pour absorber les changements de rythmes de production.

Par ailleurs, des moyens 26 pour introduire une sauce ou jus d'accompagnement dans lesdits réceptacles d'emballage 3 sont, éventuellement, prévus. Ils comprennent, par exemple, une cuve de stockage éventuellement aseptique 27 de ladite sauce ou jus après stabilisation, celle-ci étant introduite en aval par l'intermédiaire de différentes conduites 28 dans ladite enceinte de conditionnement 19, 19'.

La stabilisation et/ou le refroidissement éventuel de ladite sauce d'accompagnement est obtenue, par exemple, dans des appareils tubulaires ou à surface raclée, prévus à proximité.

Un système de conduite par automate permet, notamment, d'assurer le fonctionnement synchronisé des opérations et, éventuellement, de gérer les défaillances.

On donne dans la suite deux tableaux faisant apparaître les performances du traitement conforme à l'invention comparé au traitement classique d'appertisation, ceci pour la pasteurisation de carotte râpée (tableau 1) et la stérilisation d'haricots verts (tableau 2).

**TABLEAU 1**

| Type de traitement | VP₍₁₎ | Temps de traitement | Température | VC₍₂₎ |
|---|---|---|---|---|
| Appertisation conventionnelle | 5 | 5 min à 90 °C puis 3 min à 100 °C | | 4,8 |
| Procédé selon l'invention | 5 | 35 sec | 105 °C | 1,1 |

(1) Valeurs Pasteurisatrices calculées à partir des paramètres suivants :
   T* = 93,3 °C
   z = 8,89 °C
(2) Valeurs Cuisatrices calculées à partir des paramètres suivants :
   T* = 100 °C
   z = 33 °C

**TABLEAU 2**

| Type de traitement | VS₍₁₎ | Temps de traitement | Température | VC₍₂₎ | Texture₍₃₎ |
|---|---|---|---|---|---|
| Appertisation conventionnelle | 7 | 6 min | 127 °C | 32,9 | 14 |
| Procédé selon l'invention | 7 | 1 min 10 sec | 130 °C | 8 | 45 |

(1) Valeurs Stérilisatrices calculées à partir des paramètres suivants :
   T* = 121,1°C
   z = 10 °C
(2) Valeurs Cuisatrices calculées à partir des paramètres suivants :
   T* = 100 °C
   z = 33 °C
(3) Texture mesurée à l'aide d'un texturomètre FTC type TME1.

Le fluide caloporteur utilisé dans le cadre du traitement selon l'invention est de l'eau surchauffée, la pression étant maintenue à la pression de vapeur saturante de l'eau.

On constate ainsi que pour un même niveau de stérilisation (VS) obtenu (c'est-à-dire pour un même niveau de neutralisation de l'activité bactériologique), les temps de traitement sont nettement plus courts dans le cas de l'invention.

Le niveau de cuisson (VC) est également réduit, témoignant notamment du fait que la couleur des produits est préservée, alors que la température de traitement est légèrement supérieure.

On constate plus précisément que, avec les mêmes paramètres que ceux des essais évoqués plus haut :
- la pasteuration selon l'invention n'apporte que 0,13 à 0,48 unité de Valeur Cuisatrice par unité stérilisatrice, ceci à une température variant de 102 °C à 107 °C,
- la stérilisation selon l'invention n'apporte que 0,8 à 1,2 unité de Valeur Cuisatrice par unité stérilisatrice, ceci à une température variant de 128 °C à 132 °C.

En effet, les échanges thermiques étant favorisés selon le procédé conforme à l'invention, la stabilisation peut avoir lieu plus rapidement et entraîner un niveau de cuisson moindre des produits.

En outre, comme il apparaît dans le tableau 2 qui montre une valeur de texture plus élevée dans le cas de l'invention, la résistance mécanique des produits et dont leur fermeté après traitement sont améliorées.

La durée de conservation dépendra ensuite des conditions de conditionnement puis de stockage des emballages après remplissage.

Naturellement, d'autre modes de réalisation à la portée de l'homme de l'art, auraient pu être envisagés sans pour autant sortir du cadre de l'invention.

## Revendications

1. Procédé de traitement de produits alimentaires (1), tels que par exemple, des légumes, fruits ou autres, dans lequel :
- on sépare lesdits produits (1) en doses (2) prédéterminées,
- on stabilise lesdits produits (1) séparés en doses (2) et prévus directement accessibles,
- on conditionne lesdits produits (1) séparés en doses (2) et stabilisés dans des emballages (3).

2. Procédé selon la revendication 1, dans lequel on stabilise lesdits produits au niveau d'un support, apte à maintenir lesdites doses (2), séparées et à permettre la libre circulation d'un fluide au contact desdits produits.

3. Procédé selon la revendication 2, dans lequel on utilise comme dit support des contenants (4), ouverts et/ou perforées aptes à accueillir lesdites doses (2).

4. Procédé selon la revendication 2, dans lequel on stabilise lesdits produits (1) sous pression par injection, pulvérisation et/ou aspersion dudit fluide, prévu caloporteur.

5. Procédé selon la revendication 1, dans lequel les produits à traiter se présentent sous forme solide, sèche et divisée et on transfère lesdits produits (1) dans lesdits emballages (3) sous forme solide, sèche et divisée.

6. Procédé selon la revendication 3, dans lequel on prévoit un flux de produits (1) et on sépare lesdits produits dans lesdits contenants (4), prévus aptes à accueillir une dite dose (2).

7. Procédé selon la revendication 3, dans lequel on transfère lesdits produits (1) desdits contenants (4) dans lesdits emballages (3), prévus aptes à accueillir une même quantité de produits (1).

8. Procédé selon la revendication 1, dans lequel on prévoit alternativement ou cumulativement les étapes suivantes, préalablement à la stabilisation :
- lavage des produits alimentaires (1),
- pré-traitement thermique des produits alimentaires (1).

9. Procédé selon la revendication 1, dans lequel on refroidit sous pression contrôlée lesdits produits alimentaires (1) préalablement à leur conditionnement.

10. Procédé selon la revendication 1, dans lequel on introduit dans lesdits emballages (3) une sauce ou jus d'accompagnement ou similaire, stabilisée en parallèle selon un traitement indépendant.

11. Procédé selon la revendication 1, dans lequel on transfère lesdits produits alimentaires (1) dans lesdits emballages (3) dans un environnement microbiologiquement contrôlé.

12. Procédé selon la revendication 1, dans lequel on utilise des emballages (3) déformables.

13. Dispositif pour la mise en oeuvre du procédé, selon la revendication 1, de traitement de produits alimentaires (1) tels que par exemple, légumes, fruits ou autres, comprenant des moyens (7) d'entraînement desdits produits alimentaires (1) selon un circuit de traitement et, successivement, le long dudit circuit, au moins :
- des moyens (8) pour séparer lesdits produits en doses prédéterminées (2),
- des moyens (9) pour stabiliser lesdits produits,
- des moyens (10) pour conditionner lesdits produits dans des emballages (3).

14. Dispositif selon la revendication 13, dans lequel lesdits moyens (9) pour stabiliser, prévus dans une première zone S, coopèrent avec une enceinte (11), dite de stabilisation, lesdits moyens (8) pour séparer lesdits produits alimentaires (1) en doses (2) se trouvant dans une seconde zone D en amont de ladite première zone S et les moyens pour conditionner (10) en aval dans une troisième zone C.

15. Dispositif selon la revendication 14, dans lequel lesdits moyens d'entraînement (7) des produits alimentaires (1) comprennent un support, permettant la libre circulation d'un fluide au contact desdits produits et le maintien séparé desdites doses, ledit support étant prévu apte à circuler au moins dans ladite enceinte (11) de stabilisation.

16. Dispositif selon la revendication 15, dans lequel ledit support présente une pluralité de contenants (4), ouverts et/ou perforés, apte à accueillir lesdite doses (2).

17. Dispositif selon la revendication 15, dans lequel lesdits moyens (9) pour stabiliser les produits alimentaires (1) permettent l'injection et/ou l'aspersion, sous pression, d'un fluide caloporteur sur lesdits contenants (4).

18. Dispositif selon la revendication 15, dans lequel lesdits moyens (8) pour séparer lesdits produits alimentaires (1) en doses (2) sont aptes à permettre l'introduction d'une dite dose (2) dans chacun desdits contenants (4).

19. Dispositif selon la revendication 15, dans lequel lesdits moyens (10) pour conditionner lesdits produits alimentaires (1) sont aptes à permettre un transfert desdits produits desdits contenants (4) dans lesdits emballages (3).

20. Dispositif selon la revendication 15, comprenant, en outre, des moyens (13) pour préchauffer lesdits produits alimentaires (1) et/ou des moyens (14) pour refroidir sous pression contrôlée lesdits produits.

21. Dispositif selon la revendication 20, dans lequel lesdits moyens (13) pour préchauffer et/ou lesdits moyens (14) pour refroidir sont prévus au niveau de ladite enceinte de stabilisation (11), lesdits moyens pour préchauffer (13), pour stabiliser (9) et/ou pour refroidir (14) étant constitués de plusieurs rampes d'aspersion d'un fluide caloporteur, disposées successivement dans cet ordre en regard des moyens d'entraînement (7), ces derniers étant confinés dans ladite enceinte de stérilisation (11).

22. Dispositif selon la revendication 20, comprenant, en outre, une enceinte (20) dite de préchauffage, comprenant lesdits moyens (13) pour préchauffer, prévue entre ladite première zone D, de dosage, et ladite enceinte de stabilisation (11), et une enceinte (21), dite de refroidissement, comprenant lesdits moyens pour refroidir (14), prévue entre ladite enceinte de stérilisation (11) et ladite troisième zone C, de conditionnement, lesdits moyens d'entraînement (7) permettant par des sas isolants (22) l'introduction desdits contenants (4) dans ladite enceinte de préchauffage (20), leur transfert entre lesdites enceintes (20, 11, 21) et entre ladite enceinte de refroidissement (21) et ladite troisième zone C ainsi que leur sortie de ladite troisième zone C.

23. Dispositif selon la revendication 13, dans lequel les moyens (10) pour conditionner lesdits produits alimentaires (1) sont prévus maintenus dans un environnement microbiologiquement contrôlé.
